# EUROPÄISCHE PATENTANMELDUNG

(11) **EP 0 690 285 A1**
(43) Veröffentlichungstag der Anmeldung: **03.01.1996**
(21) Anmeldenummer: 94109252.0
(22) Anmeldetag: 29.06.1994
(51) Int. Cl.: F42D 3/00, B64D 1/04, F42C 7/00, F42C 19/08

(54) **Verfahren und Vorrichtung zum Auslösen von Lawinen mittels Explosivladungen**

(71) Anmelder: AIR ZERMATT, CH-3920 Zermatt (CH)
(72) Erfinder: Perren, Beat, CH-3920 Zermatt (CH)

(57) **Zusammenfassung**

Durch den getrennten Transport von Sprengsätzen 7 und Zündvorrichtungen 9 wird die Unfallgefahr erheblich vermindert. Die Einrichtung 11 setzt aufgrund eines Fernsteuerungssignals automatisch einen Sprengsatz 7 mit einer Zündvorrichtung 9 zu einem abwerfbaren Explosivkörper 12 zusammen, welcher durch seine Detonation am Boden die Lawine auslöst.

## Beschreibung

Die vorliegende Erfindung betrifft ein Verfahren gemäss Oberbegriff von Anspruch 1 und eine Vorrichtung gemäss Oberbegriff von Anspruch 5.

Lawinen werden künstlich ausgelöst, weil häufig das Gebiet des bevorstehenden Lawinenniedergangs bekannt ist und der gefährdete Bereich geschützt werden muss. Entsprechend werden die Lawinen zum Beispiel frühzeitig ausgelöst, so dass sie nicht zu gross werden können oder in einem bestimmten Zeitpunkt ausgelöst, in welchem sichergestellt ist, dass der gefährdete Bereich abgesperrt werden kann.

Die Auslösung erfolgt dadurch, dass das Anrissgebiet der Lawine beschossen oder dass bombenartige Explosivkörper darauf abgeworfen werden. Das Anrissgebiet der Lawine ist in der Regel schwer zuganglich und liegt manchmal in beträchtlicher Höhe. Vermehrt werden deshalb bombenartige Explosivkörper aus einem Helikopter abgeworfen, um die Lawine zu lösen.

Trotzdem gelingt es nicht immer, die Lawine rechtzeitig loszusprengen. Entweder löst sich die Lawine nicht, oder dass Wetter verhindert den vorgesehenen, ordnungsgemässen Abwurf.

Die Lawine kann sich insbesondere dann nicht lösen, wenn der Explosivkörper in den Schnee einsinkt und praktisch auf dem Erdboden explodiert. Die Schneedecke wirkt dann als Dämmschicht, welche verhindert, dass sich die Sprengwirkung voll entfalten kann.

Durch das Wetter wird ein ordnungsgemässer Abwurf insbesondere dann verhindert, wenn die Wolkendecke nach einem Schneefall in der Nacht gegen den Morgen aufreisst, so dass zwar der lawinenträchtige Schneefall erkannt und die Sprengung bestellt werden kann. Häufig ist jedoch das Wetter während oder nach einem Schneefall veränderlich, so dass sich wieder Nebel über der Abwurfstelle gebildet hat, bevor ein Fluggerät, zum Beispiel ein Helikopter, dort eintrifft.

Das verzögerte Eintreffen des Helikopters hängt insbesondere mit den Sicherheitsvorschriften im Umgang mit Sprengstoff zusammen. Sprengsätze und Zünder müssen voneinander getrennt in Sprengdepots aufbewahrt werden. Wird ein Auftrag für eine Lawinensprengung ausgelöst, sind Sprengsätze und Zünder im Depot abzuholen und auf der Helikopterbasis zusammenzusetzen. Um zwanzig, dreissig oder mehr der jeweils benötigten Explosivkörper zusammenzustellen und gesichert in transportbereitem Zustand in den Helikopter zu verladen, sind drei bis vier Mann ohne weiteres zwei Stunden beschäftigt. Bei veränderlichem Wetter, das heisst, wenn über der Abwurfstelle wieder Nebel erscheint, bringt dies Probleme. Der aufmunitionierte Helikopter könnte zwar in Wartestellung gehalten werden, dies ist aber gefährlich und widerspricht den Sicherheitsvorschriften. Entsprechend muss wieder eine Zeit von mehreren Mannstunden aufgewendet werden, um die Munition zu zerlegen und im Depot einzulagern. Die Lawine bleibt dann ungesprengt, das betreffende Gebiet muss unter Umständen während einiger Zeit gesperrt bleiben.

Ein weiteres Problem bei der Lawinensprengung besteht darin, dass die Explosivkörper, das heisst Sprengsätze und Zünder, für die routinemässige Handhabung durch das Bodenpersonal geeignet sein müssen. Weiter darf robuste Behandlung, sei es auf der Basis oder im Flug, keinesfalls zu einer Explosion führen; die Explosion muss jedoch am Sprengort zuverlässig erfolgen, da keine Blindgänger zurückbleiben dürfen.

WPO 80-01511 zeigt einen Explosivkörper mit begrenzter Eindringtiefe, was erlaubt, einen Teil der Sprengladung oberhalb der Schneedecke mit maximaler Wirkung explodieren zu lassen. Der Explosivkörper, als lange, schlanke Bombe ausgebildet, weist an der Spitze einen ihn umgebenden Ring auf, welcher verhindert, dass er nach dem Abwurf vollständig in die Schneedecke eindringt.

EP-PA 0 108 013 zeigt einen bombenartigen Explosivkörper, welcher durch einen Helikopter abgeworfen werden soll. Das heckseitige Leitwerk wirkt als Hammer für einen Aufschlagzünder und kann sicherheitshalber durch verschiedene Splinte gesichert werden. Diese Sicherung ist aber ungenügend. Vor allem bei mehrfach hintereinander erfolgender routinemässiger Aufmunitionierung von Helikoptern mit jeweils mehreren Dutzend von Explosivkörpern ausziehbare Splinte nicht immer zuverlässig in die gesicherte oder entsicherte Lage gebracht werden.

EP-PA 0 600 041 zeigt eine transportable Kabeltrommel, die mikroprozessorgesteuert in der Lage ist, eine Sprengladung über dem Sprengort abzuseilen und oberhalb der Schneedecke zur Explosion zu bringen. Es besteht keine Sicherheit gegen Fehlfunktionen, insbesondere gegen eine Fehlzündung; im weiteren ist es nicht möglich, die geforderte Anzahl von Sprengkörpern zu transportieren.

Entsprechend ist es Aufgabe der vorliegenden Erfindung, ein Verfahren und eine Vorrichtung zum Sprengen von Lawinen zu schaffen, welche erlaubt, bei einfacher Handhabung innert kürzester Zeit einen Explosivkörper über der Anrissstelle einer Lawine bereit zu stellen, ohne dass Unfallgefahr, zum Beispiel durch routinemässige Manipulationen des Bodenpersonals, besteht.

Diese Aufgabe wird durch ein Verfahren gemäss dem kennzeichnenden Teil von Anspruch 1 sowie durch eine Vorrichtung gemäss dem kennzeichnenden Teil von Anspruch 5 gelöst.

Durch den getrennten Transport von Sprengsätzen und Zündvorrichtungen bis zur Abwurfstelle wird zum vornherein verhindert, dass sich unterwegs oder auf der Basis eine ungewollte Detonation ereignen kann. Zudem wird die Vorbereitungszeit minimiert, da die Explosivkörper auf der Basis nicht zusammengesetzt werden müssen. Das Zusammensetzen erfolgt ferngesteuert in der unter dem Helikopter hängenden Vorrichtung in den letzten Minuten vor dem Anflug zur Abwurfstelle. Die Abwurfoperation als solche wird somit nicht verzögert. Weiter werden nur diejenigen Explosivkörper zusammengesetzt, welche dann auch tatsächlich abgeworfen werden. Damit wird nur getrennte Munition zurückgeschoben, was die Unfallgefahr noch einmal erheblich vermindert.

Sprengsätze und Zündvorrichtungen werden in einen transportablen Rahmen eingesetzt, welcher dann am Helikopter angehängt und so zu den verschiedenen Abwurfstellen geflogen wird. Sobald sich der Pilot nahe genug bei der Abwurfstelle befindet, kann er ferngesteuert von der Kabine aus die Einrichtung zum Zusammensetzen und Abwerfen der Explosivkörper aktivieren.

Ein bevorzugtes Ausführungsbeispiel wird anhand der Figuren näher beschrieben.

Es zeigt:
Fig 1 schematisch eine Ansicht der erfindungsgemässen Vorrichtung, wobei Details zur Entlastung der Figur weggelassen sind;
Fig 2 einen Ausschnitt von Fig 1 mit den dort weggelassenen Details; und
Fig 3 einen Schnitt durch einen Explosivkörper.

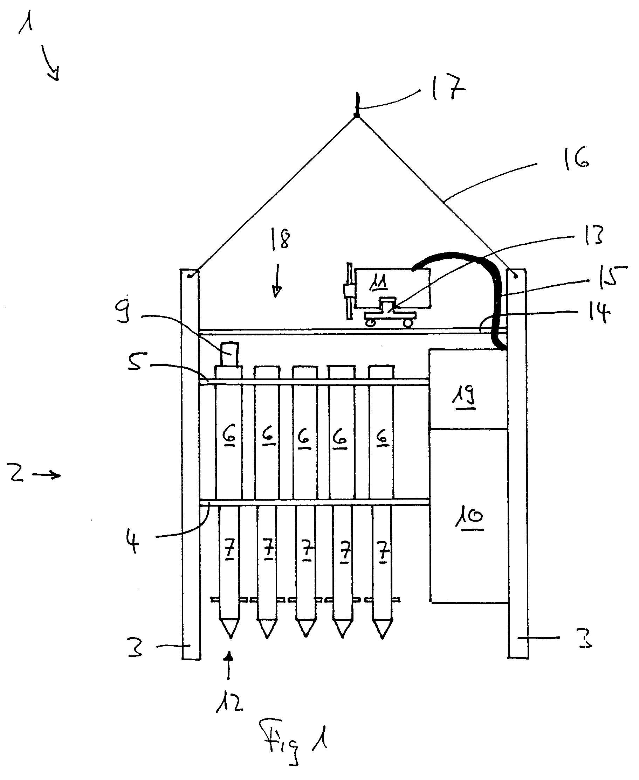

Fig 1 zeigt die Vorrichtung 1 zum Transport und Abwurf von Explosivkörpern von vorne. Dargestellt ist ein Gestell 2 mit den Seitenteilen 3, welche durch eine untere Grundplatte 4 sowie eine obere Grundplatte 5 miteinander verbunden sind. Ein Paket von Rohren 6 bildet eine erste Halterung 18 für Sprengsätze 7; die Rohre 6 sind in vertikaler Lage in den Grundplatten 4, 5 angeordnet. Eine zweite Halterung 19 für Zündvorrichtungen 9 ist auf der Höhe der oberen Grundplatte vorgesehen. Darunter befindet sich ein Bereich 10 für Nebenorgane wie Fernsteuerung, Steuereinheit für die am Gestell 2 angeordneten Organi, Stromversorgung etc.

Eine Einrichtung 11 zum Zusammensetzen und Abwerfen von Explosivkörpern 12 befindet sich im obersten Bereich des Gestells 2 und läuft, von vorne nach hinten verschiebbar, auf einer Schiene 13, die ihrerseits auf konventionelle Weise nach rechts und links verfahrbar auf Schienen 14 angeordnet ist. Ein Kabelstrang 15, welcher von der Einrichtung 11 nachgeschleppt wird, verbindet diese betriebsfähig mit den im Bereich 10 angeordneten Nebenorganen. Halteseile 16, befestigt an den Seitenteilen 3, sind mit einem Lastseil 17 eines Helikopters verbunden.

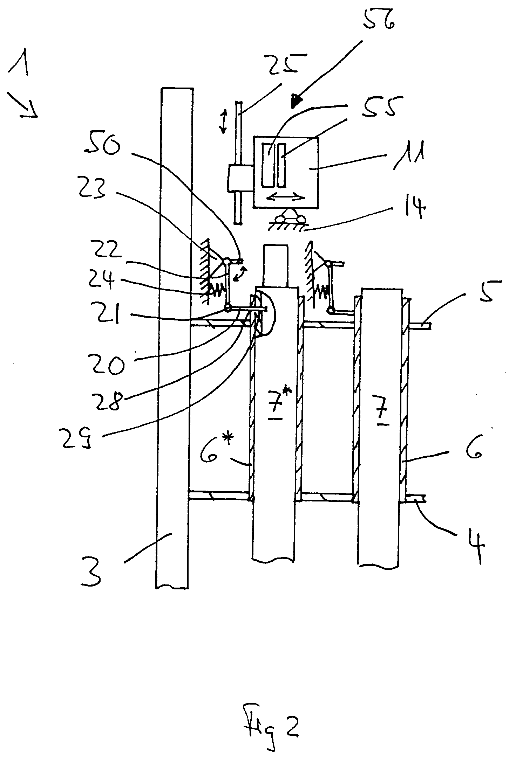

Fig 2 zeigt schematisch einen Ausschnitt von Fig 1 mit Details im Bereich der oberen Grundplatte 5. Dargestellt ist die linke Seite der Vorrichtung 1, wie sie in Fig 1 gezeigt ist. Weggelassen ist die Schienenanordnung 13, 14 der Einrichtung 11, da diese Anordnung nur der Verfahrbarkeit der Einrichtung 11 dient und im übrigen konventionell ausgeführt ist.

In der Figur ist der im Lagerrohr 6* gelagerte Sprengsatz 7* an seinem oberen Ende teilweise aufgeschnitten. Ein Verriegelungsbolzen 20 ragt durch eine Oeffnung 28 im Rohr 6* hindurch und erstreckt sich in eine Oeffnung 29 in der Wand des Sprengsatzes 7*, was diesen in seiner Lage gegenüber dem Lagerrohr 6* fixiert. Der Verriegelungsbolzen 20 ist über ein Gelenk 21 mit einem Kniehebel 22 verbunden. Der Kniehebel 22 seinerseits ist verschwenkbar an einem Lager 23 gelagert, welches Lager 23 fest am Gestell 2 abgestützt ist. Ein als Feder 24 ausgebildetes Sicherungselement hält den Verriegelungsbolzen 20 in Verriegelungsstellung.

Die Einrichtung 11 weist ein vertikal hin- und herbewegbares Betätigungsorgan 25 auf, welches, nach unten ausgefahren, auf ein waagrecht vorspringendes Ende 50 des Kniehebels 22 einwirken kann.

Weiter weist die Einrichtung 11 ein über zwei Zangenhälften 55 betriebsfähig mit den Zündvorrichtungen 9 zusammenwirkendes Greiforgan 56 auf. Das Greiforgan 56 ist, zum Anheben und Absenken der jeweils ergriffenen Zündvorrichtung 9, an der Einheit 11 vertikal beweglich angeordnet. In der Figur sind nur die Zangenhälften schematisch angedeutet.

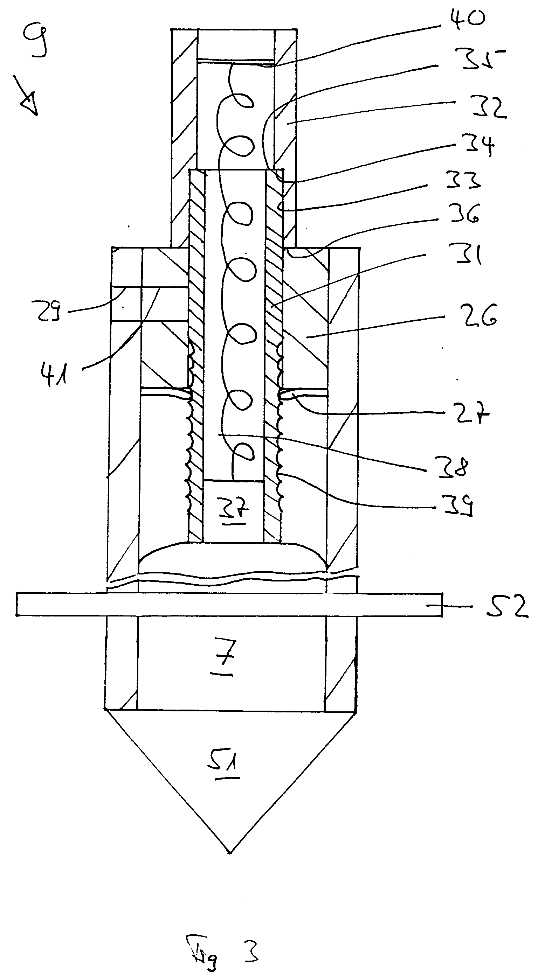

Fig 3 zeigt einen Schnitt durch einen Explosivkörpern 12, bestehend aus einem Sprengsatz 7 und einer Zündvorrichtung 9.

Am Kopfende des Sprengsatzes 7 ist ein hohlzylindrisches Einsatzstück 26 vorgesehen, welches am unteren Ende eine Tellerfeder 27 trägt, deren Innendurchmesser etwas kleiner ist als der Innendurchmesser des Einsatzstücks 26.

Am Fussende des Sprengsatzes 7 sind seitliche Streben 52 vorgesehen, welche den Explosivkörper beim Eindringen in den Schnee abbremsen und am vollständigen Eintauchen in den Schnee hindern. Der Fuss selbst ist als Konus 51 ausgebildet.

Die Zündvorrichtung 9 besteht aus einem ersten, mit dem Sprengsatz 7 über das Einsatzstück 26 zusammenwirkenden Abschnitt 31 sowie einen zweiten, mit dem ersten Abschnitt 31 verbundenen Abschnitt 32. Der zweite Abschnitt 32 ist derart ausgebildet, dass er mit einer endseitigen Innenbohrung 33 den ersten Abschnitt 31 kraftschlüssig umschliesst und mit einer inneren Schulter 34 auf dessen oberen Stirnseite 35 aufsitzt. Gleichzeitig stösst der zweite Abschnitt 32 mit seiner unteren Stirnfläche 36 am Einsatzstück 26 an.

Der erste Abschnitt 31 enthält endseitig eine Zündkapsel 37, verbunden mit einer in Windungen gelegten Reissleine 38. An seiner Aussenseite befindet sich eine Riffelung 39, deren einzelne Rillen mit der Tellerfeder 27 zusammenwirken, derart, dass die Tellerfeder 27 in den einzelnen Rillen der Riffelung 39 einrasten und so den ersten Abschnitt 31 festlegen kann.

Der zweite Abschnitt 32 besitzt ein Befestigungselement 40, an welchem die Reissleine 38 festgelegt ist.

Weiter dargestellt ist die Oeffnung 29 im Mantel des Sprengsatzes 7 bzw. die weiterführende Oeffnung 41 im Einsatzstück 26, welche erlaubt, den Verriegelungsbolzen 20 für eine sichere Verriegelung weit genug in den Sprengsatz 7 einzuführen.

In der Helikopterbasis werden die Zündvorrichtungen 9 von den Sprengsätzen 7 getrennt im Munitionsdepot gelagert. Vor einem Einsatz werden die Sprengsätze 7 in die erste Halterung und die Zündvorrichtungen 9 in die zweite Halterung 8 geladen. Diese Manipulationen sind vollkommen ungefährlich, da die Sprengsätze 7 allein nicht detonieren können. Damit ist die Vorrichtung 1 einsatzfähig und kann mit dem Helikopter zum Einsatzort geflogen werden.

Kurz vor dem Abwurf wird ferngesteuert eine Zündvorrichtung 9 in einen Sprengkörper 7 eingesetzt, so dass ein abwurfbereiter Explosivkörper 26 entsteht.

Zu diesem Zweck fährt die Einrichtung 11, gesteuert durch die im Bereich 10 angeordneten Aggregate, automatisch über die zweite Halterung 19 und ergreift mit den zangenförmigen Greifern den zweiten Abschnitt 32 einer Zündvorrichtung 9, hebt so die Zündvorrichtung 9 an und fährt mit dieser über den zu bestückenden Sprengsatz 7. Dort wird die Zündvorrichtung 9 abgesenkt und deren erster Abschnitt 31 durch das Einsatzstück 26 hindurchgedrückt, solange, bis deren unteres Ende mit der Zündkapsel 37 auf dem Sprengstoff aufsitzt und zugleich die Tellerfeder 27 in entsprechender Position in der Riffelung 39 einrastet. Damit ist die Zündvorrichtung 9 am Sprengsatz 7 betriebsfähig verriegelt, der Explosivkörper 26 abwurfbereit.

Die Einrichtung 11 hebt nun den zweiten Abschnitt 32 an, welcher vom festgelegten ersten Abschnitt 31 abgleitet, da dieser über die Tellerfeder 27 in der Art eines Widerhakens verriegelt ist. In der oberen Endposition des Greiforgans ist der zweite Abschnitt 32 vom ersten Abschnitt 31 getrennt und mit diesem nur noch über die Reissleine 38 verbunden. Der Explosivkörper 26 ist abwurfbereit.

Auf ein entsprechendes, vom Piloten ausgelöstes Fernsteuerungssignal senkt die Einrichtung 11 für den Abwurf das Organ 25 ab, bis es am horizontalen Ende 22 des Kniehebels 21 anschlägt, diesen gegen den Druck der Feder 24 im Gegenuhrzeigersinn verschwenkt, derart, dass der Verbindungsbolzen 22 aus den Oeffnungen 7', 29 herausgezogen wird. Dadurch fällt der Explosivkörper 26 von selbst aus seinem Lagerrohr 6 hinaus. Es ist ausgeschlossen, dass der Explosivkörper 26 nach der Entriegelung im Lagerrohr verharrt und so an einem anderen als dem Abwurfort abgeworfen wird. Sobald die am zweiten Abschnitt 32 festgelegte Reissleine 38 durchgestreckt ist, wird die Zündvorrichtung 37 durch die kinetische Energie des fallenden Explosivkörpers 26 aktiviert.

In der Zeit bis die Zündkapsel 37 die Detonation des Sprengstoffs auslöst, ist dieser auf den Boden gefallen und löst durch seine Detonation die Lawine aus.

Bei einer nicht in den Figuren dargestellten Ausführungsform wird die Zündkapsel während dem Abwurf durch die Reissleine 38 nur entsichert und zum Beispiel beim Aufschlag auf den Boden, im Sinn des Aufschlagzünders, ausgelöst. Wo nicht ein Aufschlagzünder verwendet wird, kann die Detonation über Funk vom Piloten ausgelöst werden.

Weiter ist es möglich, für grössere Serien von Zündvorrichtungen 9 deren Wandungen aus Karton auszubilden, was konstengünstig ist. Ebenso kann zum Beispiel der erste Abschnitt 31 aus Kunststoff ausgebildet werden, was ein besonders wirkungsvolles Zusammenwirken mit der Tellerfeder 27 sicherstellt.

## Patentansprüche

1. Verfahren zum Transport und Abwurf von je einen Sprengsatz und eine Zündvorrichtung aufweisenden Explosivkörpern aus einem Fluggerät, dadurch gekennzeichnet, dass die Zündvorrichtungen (9) von den Sprengsätzen (7) getrennt transportiert und über dem jeweiligen Abwurfort betriebsfähig zu einem abzuwerfenden Explosivkörper (12) zusammengesetzt werden.

2. Verfahren nach Anspruch 1, dadurch gekennzeichnet, dass die Zündvorrichtung (9) nach dem Abwurf, vorzugsweise durch die kinetische Energie des fallenden Explosivkörpers (12), entsichert und/oder aktiviert wird.

3. Verfahren nach einem der Ansprüche 1 oder 2, dadurch gekennzeichnet, dass die Zündvorrichtung (9) über ein mechanisches, relativ zum Fluggerät festgelegtes Verbindungsglied (38) in vorbestimmtem Abstand vom Fluggerät entsichert und/oder aktiviert wird.

4. Verfahren nach einem der Ansprüche 1 bis 3, dadurch gekennzeichnet, dass unmittelbar vor dem Abwurf maschinell die Zündvorrichtung (9) mit dem Sprengsatz (7) zusammengebracht und an ihm verriegelt wird, ein zweiter Abschnitt (32) der verriegelten Zündvorrichtung (9) von dieser getrennt und relativ zum Fluggerät festgelegt wird, wobei ein vorzugsweise als Reissleine (38) ausgebildetes Verbindungsglied die Zündvorrichtung (9) und den abgetrennten zweiten Abschnitt (32) miteinander verbindet und dass der Explosivkörper abgeworfen wird, wobei das Verbindungsglied nach einer vorbestimmten Fallstrecke die Zündvorrichtung (9) entsichert und/oder aktiviert.

5. Vorrichtung zur Durchführung des Verfahrens nach einem der Ansprüche 1 bis 4, dadurch gekennzeichnet, dass sie einen durch das Fluggerät transportables Gestell (2) aufweist mit einer ersten Halterung (18) für eine Batterie von Sprengsätzen (7), einer zweiten Halterung (19) für eine Batterie von Zündvorrichtungen (9) und einer fernbedienbaren Einrichtung (11) zum Zusammensetzen und Abwerfen der Explosivkörper (12).

6. Vorrichtung nach Anspruch 5, dadurch gekennzeichnet, dass die Zündvorrichtungen (9) betriebsfähig verbindbar mit den Sprengsätzen (7) ausgebildet sind und je ein zum Entsichern und/oder Aktivieren der Zündvorrichtung (9) vorgesehenes mechanisches Organ (31, 38) aufweisen, welches relativ zum Gestell (2) festlegbar ist.

7. Vorrichtung nach Anspruch 5, dadurch gekennzeichnet, dass jede Zündvorrichtung (9) einen ersten Abschnitt (31) mit einer Zündkapsel (37) zum Zünden des Sprengsatzes (7) und einen zweiten, zum Festlegen relativ zum Gestell vorgesehenen Abschnitt (32) aufweist, welche Abschnitte (31, 32) voneinander trennbar ausgebildet und über ein Verbindungsglied (38) miteinander verbunden sind.

8. Vorrichtung nach Anspruch 7, dadurch gekennzeichnet, dass das Verbindungsglied als Reissleine (38) vorbestimmter Länge ausgebildet ist.

9. Vorrichtung nach Anspruch 7, dadurch gekennzeichnet, dass der erste Abschnitt (31) mindestens einen Festlegebereich (39) für dessen Festlegung am Sprengsatz (7) und der Sprengsatz (7) ein zum Zusammenwirken mit dem Festlegebereich (39) vorgesehenes Sperrelement (27) aufweist.

10. Vorrichtung nach Anspruch 9, dadurch gekennzeichnet, dass der mindestens eine Festlegebereich als Riffelung (39) und das Sperrelement als Tellerfeder (27) ausgebildet sind.

11. Vorrichtung nach einem der Ansprüche 5 bis 10, dadurch gekennzeichnet, dass der erste und der zweite Abschnitt (31, 32) durch Krafteinwirkung voneinander lösbar miteinander verbunden sind.

12. Vorrichtung nach Anspruch 11, dadurch gekennzeichnet, dass der erste und der zweite Abschnitt (31, 32) kraftschlüssig miteinander verbunden sind.

13. Vorrichtung nach einem der Ansprüche 5 bis 12, dadurch gekennzeichnet, dass die erste Halterung (18) Lagerstellen (6) für die Sprengsätze (7) sowie bei jeder Lagerstelle (6) eine Verriegelungsanordnung (20, 21, 22, 23, 24) zum Festlegen eines gelagerten Sprengsatzes (7) aufweist, wobei die Lagerstellen (6) derart ausgebildet sind, dass die Sprengsätze von selbst aus ihnen hinausfallen, sobald die entsprechende Verriegelungsanordnung (20, 21, 22, 23, 24) entriegelt ist.

14. Vorrichtung nach einem der Ansprüche 5 bis 13, dadurch gekennzeichnet, dass die Einrichtung (11) zum Zusammensetzen und Abwerfen der Explosivkörper (12) ein zum Ergreifen der Zündvorrichtungen (9) ausgebildetes Greiforgan (56) aufweist, dessen Wegbereich derart ausgebildet ist, dass es eine in der zweiten Halterung (19) ergriffene Zündvorrichtung (9) anzuheben und, aus dem angehobenen Zustand, zu einem gelagerten Sprengsatz (7) betriebsfähige Position abzusenken in der Lage ist.

15. Vorrichtung nach Anspruch 9, 11 und 14, dadurch gekennzeichnet, dass das Greiforgan (56) derart ausgebildet ist, dass es eine über den zugeordneten Sprengsatz (7) gehaltene Zündvorrichtung (9) abzusenken in der Lage ist, soweit, bis die Zündvorrichtung (9) durch Ineinandergreifen von Sperrelement (27) und Festlegebereich (39) am Sprengsatz (7) verriegelt ist, und dass es den zweiten Abschnitt (32) anzuheben in der Lage ist, derart, dass sich dieser vom am Sprengsatz (7) verriegelten ersten Abschnitt (31) trennt, und dass die Haltekraft des Greiforgans (56) genügt, die Reissleine (38) zum Entsichern und/oder Aktivieren der Zündvorrichtung (9) festzuhalten.

16. Vorrichtung nach einem der Ansprüche 5 bis 15, dadurch gekennzeichnet, dass der erste und/oder der zweite Abschnitt (31, 32) der Zündvorrichtung (9) aus Karton ausgebildet ist.

17. Vorrichtung nach einem der Ansprüche 5 bis 16, dadurch gekennzeichnet, dass mindestens ein Abschnitt (31, 32) der Zündvorrichtung (9) aus Kunststoff ausgebildet ist.

18. Vorrichtung nach einem der Ansprüche 5 bis 17, dadurch gekennzeichnet, dass die Verriegelungsanordnung ein horizontal zwischen Entriegelungsposition und Verriegelungsposition verschiebliches, als Verriegelungsbolzen (20) ausgebildetes Verriegelungselement und vorzugsweise einen über ein Lager (23) abgestützten, als Kniehebel (22) ausgebildeten Hebel aufweist, wobei der Bolzen (20) und der Hebel (22) über mindestens ein Gelenk (21) miteinander verbunden sind.

19. Vorrichtung nach einem der Ansprüche 5 bis 18, dadurch gekennzeichnet, dass die Verriegelungsanordnung durch die Einrichtung (11) zum Zusammensetzen und Abwerfen der Explosivkörper (12) entriegelbar ausgebildet ist.

20. Vorrichtung nach Anspruch 19, dadurch gekennzeichnet, dass die Einrichtung (11) ein zum Entriegeln der Verriegelungsanordnung (20, 21,22, 23, 24) vertikal absenkbares Betätigungsorgan (25) aufweist.

21. Zündvorrichtung nach einem der Ansprüche 6 bis 11 oder 16 bis 17.

22. Explosivkörper mit einer Zündvorrichtung nach Anspruch 21.
